# EUROPÄISCHE PATENTSCHRIFT

(11) **EP 3 482 624 B1**
(45) Veröffentlichungstag und Bekanntmachung des Hinweises auf die Patenterteilung: **26.08.2020**
(21) Anmeldenummer: 18204649.0
(22) Anmeldetag: 06.11.2018
(51) Int. Cl.: A01F 12/32, A01F 12/34, A01F 12/44, A01D 41/127

(54) **SENSORZUSAMMENBAU FÜR EIN MÄHDRESCHERSIEB**
SENSOR ASSEMBLY FOR A COMBINE HARVESTER
ASSEMBLAGE DE CAPTEUR POUR UN TAMIS DE MOISSONNEUSE-BATTEUSE

(30) Priorität: 10.11.2017 DE 102017220037
(43) Veröffentlichungstag der Anmeldung: 15.05.2019
(73) Patentinhaber: Deere & Company, Moline, IL 61265 (US)
(72) Erfinder: Vandike, Nathan R, 68163 Mannheim (DE); Fuchs, Volker, 68163 Mannheim (DE); Schaeffer, Hans W, 68163 Mannheim (DE); Yu, Wentao W, 68163 Mannheim (DE); Kirstein, Stephan, 68163 Mannheim (DE); Müller, Sebastian, 68163 Mannheim (DE); Herlitzius, Thomas, 68163 Mannheim (DE); Korn, Christian, 68163 Mannheim (DE)
(74) Vertreter: Dehnhardt, Florian Christopher

(56) Entgegenhaltungen:
- EP-A1- 0 728 409
- EP-A2- 1 832 863
- WO-A1-2016/058890
- DE-A1-102016 203 079
- GB-A- 2 103 796
- US-A- 4 360 998

## Beschreibung

Die Erfindung betrifft ein Sieb für einen Mähdrescher mit einem Sensorzusammenbau.

### Stand der Technik

Mähdrescher dienen in der Landwirtschaft zur Ernte von Körnerfrüchten, wie Weizen, Erbsen, Bohnen oder Mais. Die Pflanzen oder ihre Fruchtstände werden vom Feld aufgenommen und einer Dresch- und Trenneinrichtung zugeführt, welche einerseits das Korn von den Erntegutresten trennt und andererseits die Erntegutreste auf dem Feld oder einem Sammelbehälter ablegt. Das ausgedroschene Korn wird einer Reinigungseinrichtung zugeführt, die mehrere hinter- und/oder übereinander angeordnete Siebe umfasst, die in eine Schwingbewegung versetzt und von unten her mit einem Luftstrom beaufschlagt werden, um Verunreinigungen (Spreu etc.) vom Korn zu trennen. Das gereinigte Korn wird in einen Korntank transportiert, aus dem es auf ein Transportfahrzeug entladen werden kann, während am oberen Ende des Obersiebs abgegebene Spreu auf dem Feld abgelegt und das am unteren Ende des Untersiebs abgegebene Gemisch mittels eines Überkehrförderers einer Nachdrescheinrichtung zugeführt wird.

Im Stand der Technik wurde vorgeschlagen, bestimmte Parameter zu erfassen, die Rückschlüsse auf eine ordnungsgemäße Funktion des Siebes ermöglichen, und diese sensierten Parameter einer Regeleinrichtung zuzuführen, die Betriebsparameter des Mähdreschers basierend auf den erfassten Parametern steuert. Die US 4 360 998 A beschreibt matrixförmig unterhalb eines Siebes angeordnete Lichtschranken, welche zwischen ihnen hindurch fallende Körner detektieren. Anhand der Körneranzahl wird auf die Verluste am Siebende geschlossen und bei Überschreiten eines Schwellenwerts eine Warnung an den Bediener gegeben. In der DE 10 2016 203 079 A1 werden Sensoreinheiten beschrieben, die einerseits Parameter (Strömungsgeschwindigkeit und Druck) der vorbeiströmenden Luft und andererseits durch Lichtschranken die vom Sieb nach unten abgegebenen Körner detektieren. Die Signale dienen dazu, Betriebsparameter des Mähdreschers zu steuern, insbesondere die Gebläsedrehzahl und die Sieböffnung. Die EP 0 728 409 A1 zeigt ein Sieb für einen Mähdrescher mit entlang der Länge des Siebs verteilten Verlustsensoren, die in Stabbauweise ausgeführt sind.

### Aufgabe

Die bisherigen Sensoren zur Erfassung von Betriebsparametern des Siebes nach US 4 360 998 A umfassen Gehäuse, die Sender und Empfänger der Lichtschranken enthalten. Analog umfassen die Sensoren nach DE 10 2016 203 079 A1 Gehäuse, die paarweise an einer gemeinsam genutzten Befestigungsvorrichtung angebracht werden, welche ihrerseits unterhalb des Siebes befestigt wird. In beiden Fällen ist es demnach erforderlich, eine relativ große Anzahl an Gehäusen oder Befestigungsvorrichtungen unterhalb des Siebes zu montieren, um die matrixartige Anordnung der Sensoren zu erzielen, die es ermöglicht, die Verteilung der vom Sieb nach unten fallenden Körner über die Länge und Breite des Siebes zu erfassen. Das bedingt einen relativ großen Montageaufwand. Zudem ergeben sich eine große Anzahl voneinander getrennter, vom Sieb nach unten ragender Gehäuse, die unerwünschte Verwirbelungen erzeugen und beim Siebein- und -ausbau leicht beschädigt werden können. Die Aufgabe der vorliegenden Erfindung wird darin gesehen, einen Sensorzusammenbau für ein Mähdreschersieb sowie ein Mähdreschersieb und einen Mähdrescher bereitzustellen, welche die erwähnten Nachteile nicht oder in einem geringeren Maße aufweisen.

### Lösung

Diese Aufgabe wird erfindungsgemäß durch die Lehre des Patentansprüche 1 und 7 gelöst, wobei in den weiteren Patentansprüchen Merkmale aufgeführt sind, die die Lösung in vorteilhafter Weise weiterentwickeln.

Ein Sieb für einen Mähdrescher ist mit sich längs erstreckenden Rahmenelementen, die durch vordere und hintere, sich quer erstreckende Rahmenelemente untereinander verbunden sind, durch eine Verstellstange in ihrem Öffnungswinkel verstellbaren Lamellen und einem oder mehreren, sich längs des Siebes ersteckenden Sensorzusammenbauten ausgestattet. Der unterhalb des Siebes angebrachte Sensorzusammenbau umfasst eine Anzahl an jeweils ein oder mehrere Sensorelemente aufweisenden Sensoreinheiten, von denen mehrere Sensoreinheiten hintereinander in einem sich in Längsrichtung des Siebes erstreckenden Hohlprofil angeordnet sind.

Auf diese Weise erreicht man eine geschützte Anbringung der Sensoreinheiten und vermeidet die durch die bisherigen, hintereinander angeordneten Sensoreinheiten bedingten Verwirbelungen.

Das Hohlprofil kann im unteren Bereich strömungsgünstig abgerundet oder V-förmig zulaufend ausgeformt sein. Es kann an einem sich längs erstreckenden Steg oder Rahmenelement des Siebes befestigt sein und sich in dessen Längsrichtung erstrecken.

Die Sensorelemente können beliebige Messwerte erfassen. Beispielsweise können sie zwischen in seitlicher Richtung des Siebes benachbarten Sensoreinheiten durchlaufendes Material und/oder die Strömungsgeschwindigkeit der vorbeiströmenden Luft und/oder den Luftdruck erfassen.

Die Sensoreinheiten können jeweils zwei Gehäusehälften umfassen, zwischen denen eine die Sensorelemente halternde Platine angeordnet ist, während den Sensorelementen Fenster oder Öffnungen in den Gehäusehälften zugeordnet sein können.

Der Mähdrescher kann mit einer Steuerung zur Kontrolle von Aktoren zur Verstellung der Drehzahl des Gebläses und/oder des Öffnungswinkels von Lamellen des Siebes basierend auf Ausgangswerten des Sensorzusammenbaus versehen sein.

### Ausführungsbeispiel

In den Zeichnungen ist ein nachfolgend näher beschriebenes Ausführungsbeispiel dargestellt. Es zeigt:
- Fig. 1: eine seitliche Ansicht eines Mähdreschers,
- Fig. 2: eine perspektivische Ansicht eines Siebes der Reinigung des Mähdreschers der Figur 1,
- Fig. 3: eine perspektivische Ansicht eines Abschnitts eines langgestreckten Hohlprofils, in dem eine Sensoreinheit angeordnet ist,
- Fig. 4: eine Explosionszeichnung einer Sensoreinheit,
- Fig. 5: eine perspektivische Ansicht einer Sensoreinheit von einer Seite und
- Fig. 6: eine perspektivische Ansicht einer Sensoreinheit von der anderen Seite.

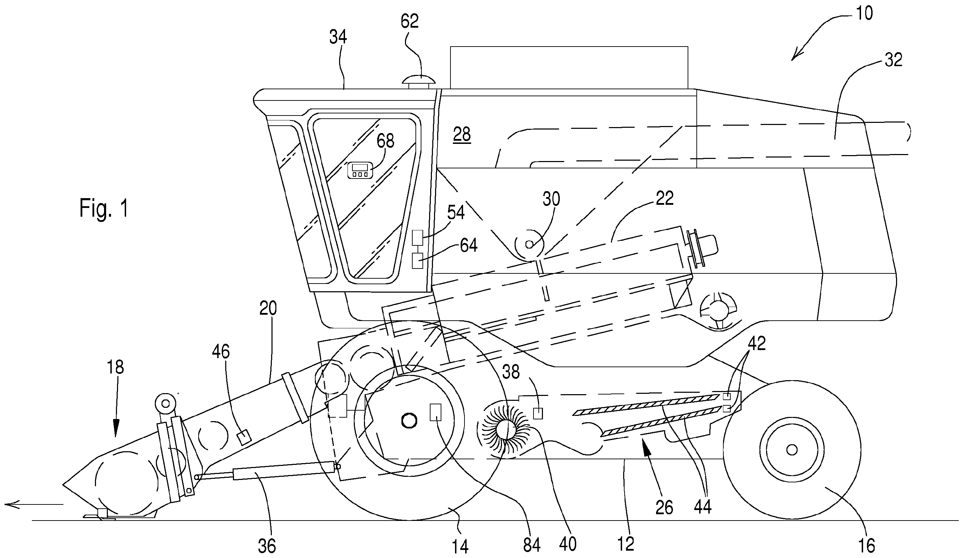

Die Figur 1 zeigt eine selbstfahrende Erntemaschine in Form eines Mähdreschers 10 mit einem Fahrgestell 12, das sich über angetriebene vordere Räder 14 und lenkbare rückwärtige Räder 16 auf dem Boden abstützt und von diesen fortbewegt wird. Die Räder 14, 16 werden mittels nicht gezeigter Antriebsmittel in Drehung versetzt, um den Mähdrescher 10 z.B. über ein abzuerntendes Feld zu bewegen. Im Folgenden beziehen sich Richtungsangaben, wie vorn und hinten, auf die Fahrtrichtung V des Mähdreschers 10 im Erntebetrieb, die in der Figur 1 nach links verläuft.

An den vorderen Endbereich des Mähdreschers 10 ist ein Erntevorsatz 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägfördererzusammenbau 20 einer Dresch- und Trenneinrichtung 22 in Form eines Axialdreschwerks zuzuführen, das auch als Tangentialdreschwerk mit nachfolgenden Trennrotoren und/oder Schüttlern ausgeführt sein könnte. Das in der Dresch- und Trenneinrichtung 22 durch Dreschkörbe und Roste hindurchtretende, Körner und Verunreinigungen enthaltende Gemisch gelangt in eine Reinigungseinrichtung 26. Durch die Reinigungseinrichtung 26 gereinigtes Getreide wird mittels einer Körnerschnecke einem Elevator zugeführt, der es in einen Korntank 28 befördert. Das gereinigte Getreide aus dem Korntank 28 kann durch ein Entladesystem mit einer Querschnecke 30 und einem Entladeförderer 32 entladen werden. Die genannten Systeme werden mittels eines Verbrennungsmotors angetrieben und von einem Bediener aus einer Fahrerkabine 34 heraus kontrolliert und gesteuert, wozu ihm eine Bedienerschnittstelle 68 zur Verfügung steht.

Eine Steuerung 54 kontrolliert über eine Ventileinheit 64 die Position eines Aktors 36 zur Veränderung der Höhe des Erntevorsatzes 18 über dem Boden, eines Aktors 38 zur Verstellung der Drehzahl eines Gebläses 40 der Reinigung 26, von zwei Aktoren 42 zur Verstellung der Öffnungsweite von Sieben 44 der Reinigung 26 und eines Aktors 84 zur Vorgabe der Vortriebsgeschwindigkeit des Mähdreschers 10. Ein weiterer von der Steuerung 54 kontrollierter Aktor (nicht gezeigt) könnte die Höhe einer Haspel des Erntevorsatzes 18 vorgeben. Die Steuerung 54 kann mit einer Positionsbestimmungseinrichtung 62 und/oder mit seinem Sensor 46 zur Erfassung des Durchsatzes im Schrägförderer 20 verbunden sein.

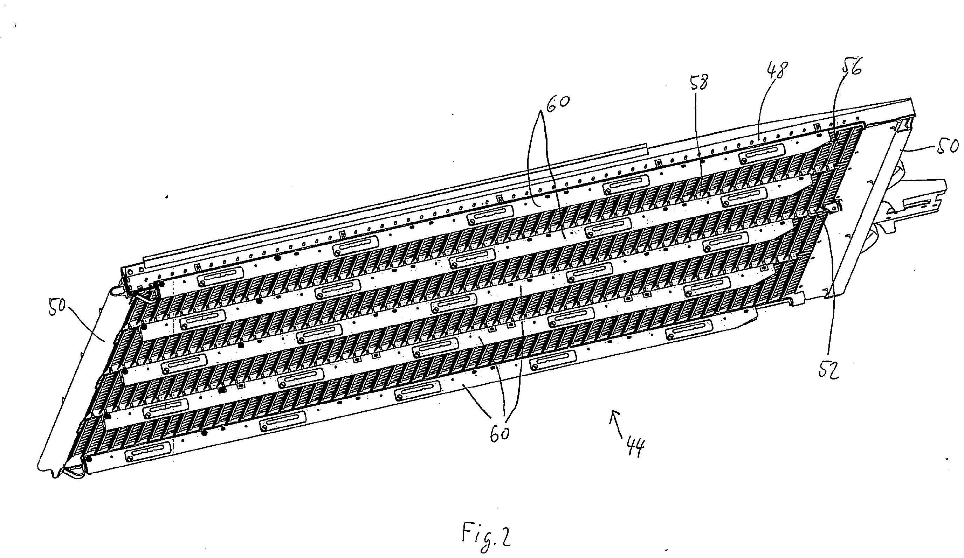

Die Figur 1 zeigt zwei übereinander angeordnete Siebe 44, von denen das obere üblicherweise als Obersieb und das untere als Untersieb bezeichnet wird. Dem Obersieb kann, anders als gezeigt, noch ein Vorsieb vorgelagert sein (s. DE 10 2005 026 608 A1). Die Figur 2 zeigt eines der Siebe 44 des Mähdreschers 10 der Figur 1. Das Sieb umfasst in an sich bekannter Weise sich längs erstreckende Rahmenelemente 48, die durch vordere und hintere, sich quer erstreckende Rahmenelemente 50 untereinander verbunden sind. Sich längs erstreckende Stege 58 sind parallel zu den sich längs erstreckenden Rahmenelementen 48 angebracht und fest mit den sich quer erstreckenden Rahmenelementen 50 verbunden. Eine Verstellstange 52 ist mit dem in der Figur 2 nicht erkennbaren Aktor 42 gekoppelt und dient zur Verstellung des Öffnungswinkels der Lamellen 56 des Siebes 44, das im Betrieb in eine nach vorn und hinten gerichtete Schwingbewegung versetzt wird. Es wäre auch denkbar, das Sieb 44 in Längsrichtung in zwei Hälften zu teilen, deren Lamellen 56 durch getrennte Aktoren 42 verstellbar sind (vgl. DE 101 11 531 A1). Das Sieb 44 ist mit Sensorzusammenbauten 60 ausgestattet, von denen sich bei dem dargestellten Ausführungsbeispiel insgesamt fünf in Längsrichtung des Siebes 44 erstrecken. Die Sensorzusammenbauten 60 sind unterhalb der sich längs erstreckenden Rahmenelemente 48 und unterhalb der Stege 58 angebracht und dort durch sich quer erstreckende Schraubverbindungen befestigt. Es kann jedes der Siebe 44 des Mähdreschers 10 der Figur 1 mit Sensorzusammenbauten 60 ausgestattet sein oder nur das untere oder obere Sieb 44. Auch könnte das Vorsieb mit Sensorzusammenbauten 60 versehen werden, die analog zu den in der Figur 2 gezeigten Sensorzusammenbauten 60 ausgeführt und am Vorsieb befestigt werden.

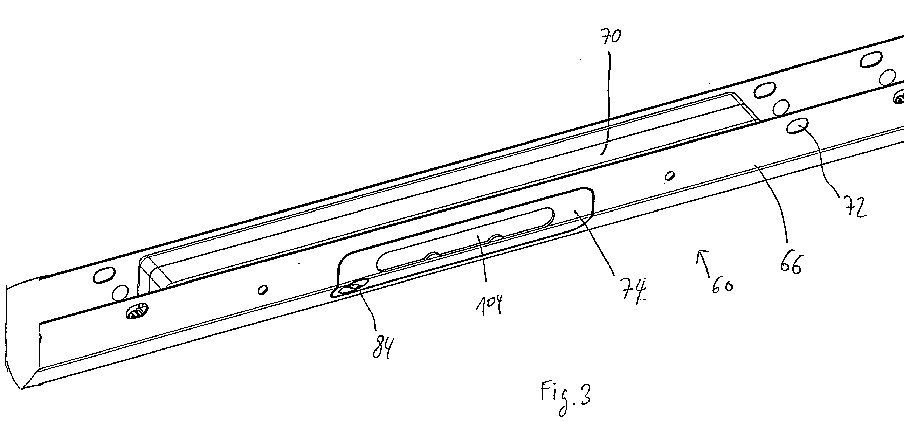

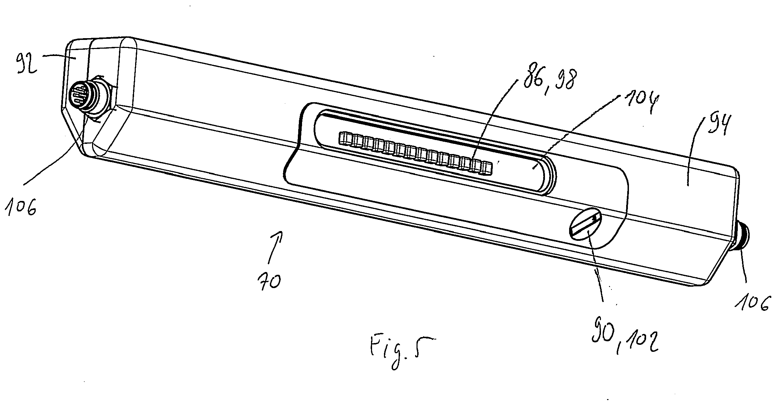

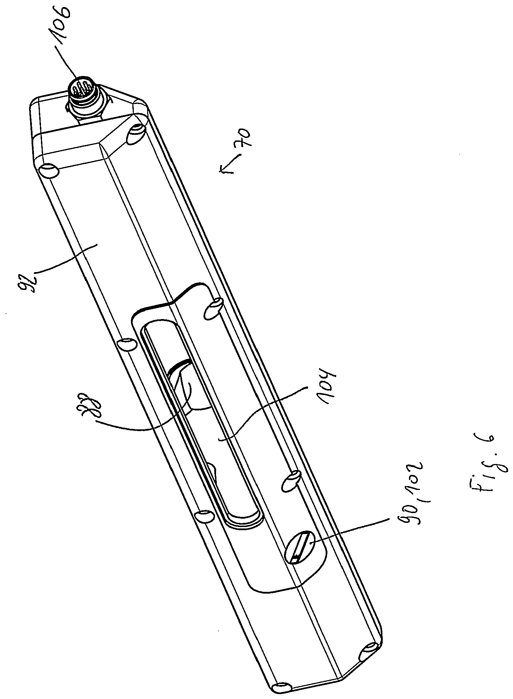

Die Sensorzusammenbauten 60 sind in den Figuren 3 bis 6 im Detail gezeigt. Die Sensorzusammenbauten 60 umfassen Hohlprofile 66, die sich über die gesamte Länge der Sensorzusammenbauten 60 (oder jeweils einen Teil davon, wenn mehrere Hohlprofile 60 zusammengefügt, z.B. -gesteckt werden) erstrecken. Die Hohlprofile 66 sind durch die erwähnten Schraubverbindungen, die sich durch Öffnungen 72 in den Hohlprofilen 66 und Bohrungen in den Stegen 58 oder sich längs erstreckenden Rahmenelementen 48 erstrecken, an der tragenden Konstruktion des Siebs 44 befestigt. Der Querschnitt der Hohlprofile 66 ist, wie in der Figur 3 gezeigt, im oberen Bereich rechteckig und im unteren Bereich nach unten V-förmig zulaufend (oder in beliebiger Weise gerundet) ausgeformt. Dadurch erreicht man, dass die vom Gebläse 40 bereitgestellte Luftströmung relativ wirbelarm zur Seite und nach oben abgelenkt wird.

Innerhalb der Hohlprofile 66 sind Sensoreinheiten 70 angeordnet, die durch Fenster 74 im Hohlprofil 66 mit dem Raum außerhalb des Hohlprofils 66 zusammenwirkende Sensorelemente 86, 88, 90 umfassen. Innerhalb eines Hohlprofils 66 sind mehrere Sensoreinheiten 70 (bei der Ausführungsform nach Figur 2: fünf) hintereinander angeordnet und untereinander und mit der Steuerung 54 elektrisch verbunden.

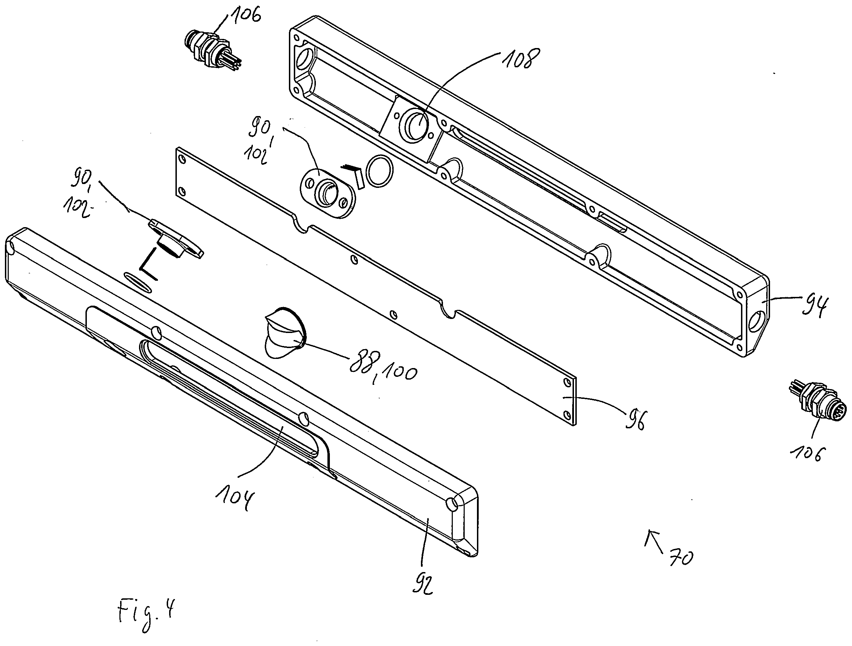

Die Figuren 4 bis 6 zeigen eine einzelne Sensoreinheit 70. Sie umfasst zwei zusammenschraub- oder schnappbare (nicht notwendigerweise spiegelsymmetrische) Gehäusehälften 92, 94, zwischen denen eine Platine 96 angeordnet ist, die auf einer Seite eine Reihe von lichtempfindlichen Elementen 98, die als Sensorelement 86 dienen, und auf der anderen Seite einen Lichtsender 100 mit einer Zylinderlinse trägt, der als Sensorelement 88 dient. Auf beiden Seiten der Platine 96 sind zudem Luftströmungssensoren 102 angeordnet, die als Heißfilmsensoren ausgeführt sein können und als Sensorelement 90 dienen. Den Sensorelementen 86 und 88 sind jeweils Fenster 104 in ihren Gehäusehälften 92, 94 zugeordnet, und den Sensorelementen 90 entsprechende Öffnungen 108 in ihren Gehäusehälften 92, 94. Während die Trennungslinie zwischen den Gehäusehälften in den Figuren 4 bis 6 vertikal orientiert ist, könnte sie auch horizontal verlaufen, was analog auch für die Orientierung der Platine 96 gilt.

Der Lichtsender 100 jeweils einer Sensoreinheit 70 mit den lichtempfindlichen Elementen 98 einer in Querrichtung benachbarten Sensoreinheit 70 zusammen, um eine Lichtschranke zu bilden, um zwischen den Sensoreinheiten 70 durchlaufendes Material (insbesondere Korn) zu erfassen. Die Luftströmungssensoren 102 erfassen die Strömungsgeschwindigkeit der vorbeiströmenden Luft des Gebläses 40. Sie könnten auch durch Drucksensoren ergänzt oder ersetzt werden. Die Platine 96 trägt noch eine Anzahl an Bauelementen zur Vorverarbeitung der Signale der Sensorelemente 86 bis 90 und ist durch Steckverbindungen 106 direkt oder dazwischen angeordnete Kabel mit der entlang des Hohlprofils 66 benachbarten Sensoreinheiten 70 elektrisch verbunden. Die vorderste oder hinterste Sensoreinheit 70 jedes Hohlprofils 66 ist ihrerseits elektrisch (z.B. über einen Bus) oder drahtlos mit der Steuerung 54 gekoppelt.

Es sei noch angemerkt, dass die Sensoreinheiten 70 und die Hohlprofile 66 zusammenpassende Merkmale aufweisen, mit denen die Sensoreinheiten 70 gegenüber den Hohlprofilen 66 in Längsrichtung der Hohlprofile 66 und den beiden dazu senkrechten Richtungen sehr einfach ausgerichtet werden können. Diese zusammenpassenden Merkmale sind insbesondere nach außen ragende Bereiche der Gehäusehälften 92, 94, welche in die Fenster 74 des Hohlprofils 66 eindringen und die Sensoreinheiten 70 dort positionieren. Bei Bedarf können zusätzliche Mittel zur Positionierung und/oder Fixierung der Sensoreinheiten 70 in den Hohlprofilen 66 vorgesehen sein, wie Schrauben.

Nach alledem sind die Sensoreinheiten 70 mechanisch geschützt innerhalb der Hohlprofile 66 angeordnet, die zudem relativ einfach an der tragenden Struktur des Siebes 44 befestigt werden können und aufgrund ihrer glatten und strömungsgünstigen Oberflächen die Aerodynamik kaum ungünstig beeinflussen. Auch können sich deshalb nur wenig Strohpartikel an den Sensorzusammenbauten 60 ansammeln. Die Signale der Sensoreinheiten 70 können durch die Steuerung 54 zur automatischen Ansteuerung des Gebläses 40 (über den Aktor 38) und/oder des Öffnungswinkels der Lamellen 56 des Siebes 44 (über den Aktor 42) verwendet werden, wozu auf die Offenbarungen der DE 10 2016 203 079 A1 und der DE 195 06 059 A1 verwiesen sei.

Zudem kann die Steuerung 54 die Vortriebsgeschwindigkeit des Mähdreschers 10 über den Aktor 84 basierend auf den Signalen der Sensoreinheiten 70 kontrollieren, z.B. wenn anhand der Sensorelemente 90 eine zu hohe Siebbelegung erkannt wird, die sich durch sinkende (mittels der Sensorelemente 90 detektierte)Strömungsgeschwindigkeiten der Luft bemerkbar macht, wobei die Signale des Sensors 46 oder aus einer Karte anhand der Positionserfassungseinrichtung 62 ausgelesene Signale hinsichtlich der erwarteten Bestandsdichte ergänzend berücksichtigt werden können. Auch können die Signale der Sensoreinheiten 70 zur Kontrolle von Parametern der Dresch- und Trenneinrichtung 22 dienen (Korb- und/oder Rostabstand und/oder Drehzahl).

## Patentansprüche

1. Sieb (44) für einen Mähdrescher (10), mit sich längs erstreckenden Rahmenelementen (48), die durch vordere und hintere, sich quer erstreckende Rahmenelemente (50) untereinander verbunden sind, durch eine Verstellstange (52) in ihrem Öffnungswinkel verstellbaren Lamellen (56) und wenigstens einem sich längs ersteckenden Sensorzusammenbau (60), der unterhalb des Siebes (44) angebracht und mit einer Anzahl an Sensorelemente (86, 88, 90) aufweisenden Sensoreinheiten (70) ausgestattet ist, **dadurch gekennzeichnet, dass** mehrere Sensoreinheiten (70) hintereinander innerhalb eines sich in Längsrichtung des Siebes (44) erstreckenden Hohlprofils (66) angeordnet sind.

2. Sieb (44) nach Anspruch 1, wobei das Hohlprofil (66) im unteren Bereich abgerundet oder V-förmig zulaufend ausgeformt ist.

3. Sieb (44) nach Anspruch 1 oder 2, wobei das Hohlprofil (66) an einem sich längs erstreckenden Steg (58) oder Rahmenelement (48) des Siebes (44) befestigt ist und sich in dessen Längsrichtung erstreckt.

4. Sieb (44) nach einem der vorhergehenden Ansprüche, wobei die Sensorelemente (86, 88, 90) eingerichtet sind, zwischen in seitlicher Richtung des Siebes (44) benachbarten Sensoreinheiten (70) durchlaufendes Material und/oder die Strömungsgeschwindigkeit der vorbeiströmenden Luft und/oder den Luftdruck zu erfassen.

5. Sieb (44) nach einem der vorhergehenden Ansprüche, wobei die Sensoreinheiten (70) zwei Gehäusehälften (92, 94) umfassen, zwischen denen eine die Sensorelemente (86, 88, 90) halternde Platine (96) angeordnet ist und den Sensorelementen (86, 88, 90) Fenster (104) oder Öffnungen (108) in den Gehäusehälften (92, 94) zugeordnet sind.

6. Sieb (44) nach Anspruch 5, wobei die Gehäusehälften (92, 94) überstehende Bereiche umfassen, die sich in Fenster (72) des Hohlprofils (66) erstrecken und die Sensoreinheit (70) im Hohlprofil (66) zumindest in dessen Längsrichtung positionieren.

7. Mähdrescher (10), mit einer Reinigungseinrichtung (26), die ein Gebläse (40) und ein Sieb (44) nach einem der vorhergehenden Ansprüche umfasst.

8. Mähdrescher (10) nach Anspruch 7, mit einer Steuerung (54) zur Kontrolle von Aktoren (38, 42) zur Verstellung der Drehzahl des Gebläses (40) und/oder des Öffnungswinkels von Lamellen (56) des Siebes (44) basierend auf Ausgangswerten des Sensorzusammenbaus (60).

## Claims

1. Screen (44) for a combine harvester (10), having longitudinally extending frame elements (48) that are connected together by front and rear, transversely extending frame elements (50), slats (56) that are adjustable in terms of their opening angle by an adjusting rod (52), and at least one longitudinally extending sensor assembly (60), which is fitted beneath the screen (44) and is equipped with a number of sensor units (70) having sensor elements (86, 88, 90), **characterized in that** a plurality of sensor units (70) are arranged in succession within a hollow profile (66) extending in the longitudinal direction of the screen (44).

2. Screen (44) according to Claim 1, wherein the hollow profile (66) is formed in a rounded manner or in a manner tapering in a V-shaped manner in the lower region.

3. Screen (44) according to Claim 1 or 2, wherein the hollow profile (66) is fastened to a longitudinally extending bar (58) or frame element (48) of the screen and extends in the longitudinal direction thereof.

4. Screen (44) according to one of the preceding claims, wherein the sensor elements (86, 88, 90) are designed to pick up material passing through between sensor units (70) that are adjacent in a lateral direction of the screen (44) and/or to pick up the flow rate of the air flowing past and/or the air pressure.

5. Screen (44) according to one of the preceding claims, wherein the sensor units (70) comprise two housing halves (92, 94), between which a mounting plate (96) supporting the sensor elements (86, 88, 90) is arranged, and the sensor elements (86, 88, 90) are assigned windows (104) or openings (108) in the housing halves (92, 94).

6. Screen (44) according to Claim 5, wherein the housing halves (92, 94) comprise protruding regions that extend into windows (72) of the hollow profile (66) and position the sensor unit (70) in the hollow profile (66) at least in the longitudinal direction thereof.

7. Combine harvester (10) having a cleaning device (26) that comprises a fan (40) and a screen (44) according to one of the preceding claims.

8. Combine harvester (10) according to Claim 7, having a controller (54) for controlling actuators (38, 42) for adjusting the rotational speed of the fan (40) and/or the opening angle of slats (56) of the screen (44) on the basis of output values of the sensor assembly (60).

## Revendications

1. Tamis (44) pour une moissonneuse-batteuse (10), comprenant des éléments de cadre (48) qui s'étendent en longueur, lesquels sont reliés entre eux par des éléments de cadre (50) qui s'étendent transversalement, des lamelles (56) à l'angle d'ouverture réglable par une tige de réglage (52) et au moins un assemblage de capteurs (60) qui s'étend en longueur, lequel est installé au-dessous du tamis (44) et est équipé d'unités de capteur (70) possédant un certain nombre d'éléments capteurs (86, 88, 90), **caractérisé en ce que** plusieurs unités de capteur (70) sont disposées les unes derrière les autres à l'intérieur d'un profilé en creux (66) qui s'étend dans la direction longitudinale du tamis (44).

2. Tamis (44) selon la revendication 1, le profilé creux (66) étant façonné arrondi ou effilé en forme de V dans la zone inférieure.

3. Tamis (44) selon la revendication 1 ou 2, le profilé creux (66) étant fixé à un élément jointif (58) ou un élément de cadre (48) qui s'étend en longueur du tamis (44) et s'étendant dans la direction longitudinale de celui-ci.

4. Tamis (44) selon l'une des revendications précédentes, les éléments capteurs (86, 88, 90) étant conçus pour détecter la matière qui passe entre des unités de capteur (70) voisines dans la direction latérale du tamis (44) et/ou la vitesse d'écoulement de l'air qui s'écoule devant celles-ci et/ou la pression de l'air.

5. Tamis (44) selon l'une des revendications précédentes, les unités de capteur (70) comportant deux moitiés de boîtier (92, 94) entre lesquelles est disposée une platine (96) qui maintient les éléments capteurs (86, 88, 90) et des fenêtres (104) ou des ouvertures (108) dans les moitiés de boîtier (92, 94) étant associées aux éléments capteurs (86, 88, 90).

6. Tamis (44) selon la revendication 5, les moitiés de boîtier (92, 94) comportant des zones en saillie qui s'étendent dans des fenêtres (72) du profilé creux (66) et positionnent l'unité de capteur (70) dans le profilé creux (66) au moins dans sa direction longitudinale.

7. Moissonneuse-batteuse (10) comprenant un dispositif de nettoyage (26), lequel comporte une soufflerie (40) et un tamis (44) selon l'une des revendications précédentes.

8. Moissonneuse-batteuse (10) selon la revendication 7, comprenant une commande (54) destinée à contrôler des actionneurs (38, 42) servant au réglage de la vitesse de rotation de la soufflerie (40) et/ou de l'angle d'ouverture de lamelles (56) du tamis (44) en se basant sur des valeurs initiales de l'assemblage de capteurs (60) .
